Europäisches Patentamt

European Patent Office

Office européen des brevets

(19)

(11) Numéro de publication: **0 080 959**
**B1**

(12) **FASCICULE DE BREVET EUROPEEN**

(45) Date de publication du fascicule du brevet: **30.04.86**

(51) Int. Cl.⁴: **A 01 L 5/00, A 01 L 3/00**

(21) Numéro de dépôt: **82430034.7**

(22) Date de dépôt: **23.11.82**

(54) **Dispositif chaussant pour équidés.**

(30) Priorité: **27.11.81 FR 8122460**

(43) Date de publication de la demande:
**08.06.83 Bulletin 83/23**

(45) Mention de la délivrance du brevet:
**30.04.86 Bulletin 86/18**

(84) Etats contractants désignés:
**AT BE CH DE GB IT LI LU NL SE**

(56) Documents cités:
**DE-A-2 208 962**
**FR-A-2 076 406**
**FR-A-2 344 223**
**US-A-3 236 310**

(73) Titulaire: **Voland, Frédéric**
**16 Avenue Henri Barbusse**
**F-13760 St. Cannat (FR)**

(72) Inventeur: **Voland, Frédéric**
**16 Avenue Henri Barbusse**
**F-13760 St. Cannat (FR)**

(74) Mandataire: **Roman, Alphonse**
**35 Rue Paradis**
**F-13001 Marseille (FR)**

Courier Press, Leamington Spa, England.

## Description

L'objet de l'invention concerne un dispositif chaussant pour équidés.

Il est destiné à la protection des pieds des chevaux, poneys, ânes, mulets et similaires dans les domaines utilitaires et sportifs.

Jusqu'à ce jour, les sabots étaient équipés, soit par des ferrures classiques et dérivés, soit par des hipposandales en résine synthétique ou autres.

Ces éléments présentaient de multiples inconvénients, ils n'étaient pas suffisamment amortisseur, car le positionnement du fer ne faisait participer à l'amortissement que la paroi et non l'ensemble porteur qui comporte la sole, fourchette et le bord inférieur paroi, de plus, le collage ou clouage sur le sabot empêche ce dernier de se dilater. Enfin, le poids des fers est un facteur limitatif des performances. Ces protections en général sont inefficaces contre les plaies pénétrantes de la sole, ainsi que contre les contusions par corps étrangers coincés entre le fer et la sole.

Par contre, les hipposandales emboîtées ou lacées présentent une absence de contention efficace sur le sabot à cause de leur souplesse, ainsi qu'une absence totale d'effets amortisseurs et protecteurs ce qui entraîne une possibilité de blessures sans parler de l'usure rapide des matériaux utilisés.

Les dispositifs connus tels que ceux revendiquant le brevet N° FR—A—2.076.406 des protecteurs de sabots ne décrivent en aucun cas une enveloppe amortisseuse recouvrant intégralement le sabot et indépendante de l'élément de protection externe en matière dure.

Le dispositif suivant l'invention supprime ces inconvénients c'est-à-dire ceux des ferrures et des hipposandales en assurant un amortissement optimum une contention élastique efficace et non traumatisante, tout en donnant au pied un appui sur la totalité des surfaces portantes inférieures comprenant la sole, bord inférieur de la paroi, et la fourchette, de plus le pied peut se dilater librement tout en étant protégé sur toutes ses faces.

Il est constitué par la combinaison d'un matériau enveloppant souple et élastique, dit enveloppe interne, indépendant du sabot du cheval qu'il protège sur toutes ses faces avec une enveloppe extérieure rigide et résistante aux chocs et à l'usure et indépendante de l'enveloppe interne, mais se moulant exactement dessus.

Sur les dessins annexés, donnés à titre d'exemple non limitatif, d'une des formes de réalisation de l'objet de l'invention:

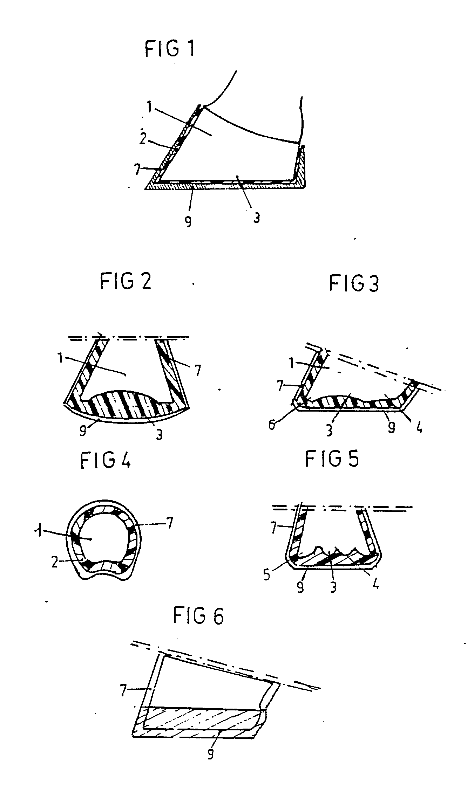

La figure 1 représente vue en coupe longitudinale les recouvrements protecteurs; les figures 1 à 5 montrent à une échelle différente les sections de recouvrements longitudinaux et transversaux et en plan; la figure 6 représente les particularités des structurations du revêtement externe.

Le sabot 1 reçoit sur l'ensemble de ses faces un revêtement 2 souple et élastique recouvrant l'ensemble de ses surfaces et les protégeant.

Le recouvrement interne protège les os, cartilages, coussinets plantaires, chair veloutée, chair feuilletée, vaisseaux sanguins, lymphatiques et la fourchette et toutes les parties sensibles et délicates.

La fonction de cette couche portante 2 est celle comparable à l'amortissement obtenu à l'aide d'un coussinet hydraulique. Son efficacité découle du fait que l'appui de la fourchette 4 et de la sole 5 est aussi complet que possible.

Cet appui s'identifie dans son intégralité aux parties en contact mais en est totalement indépendant.

Cette couche élastique et souple, moule le sabot et épouse la forme de la pince 6, de la semelle 3, et de la fourchette 4.

Elle peut être en caoutchouc, en élastomère et en toute résine synthétique présentant les mêmes qualités d'élasticité et de souplesse.

La paroi extérieure 7, par contre, se moule exactement sur l'enveloppe souple et élastique 2 qu'elle protège contre les chocs.

Elle est légèrement élastique à sa partie supérieure 8 ne serait ce que pour permettre à la chaussure de s'enfiler sur le sabot 1. Par contre, avec progressivité elle atteint au niveau de la semelle 9, une rigidité maximale pour assurer une protection efficace et résister à l'usure.

La couche externe indépendante peut être réalisée avec une couche d'adiprene® homogène dont on fait varier l'épaisseur pour obtenir plus d'élasticité.

Il est possible également de faire une face interne souple et externe dure ces deux enveloppements demeurant indépendants.

Des ouvertures peuvant être prévues pour le passage de sangles de retenues.

La face externe peut recevoir des garnitures renfor çatrices des crampons ou autres accessoires.

De toute façon, l'homogéneité du matériau de contention et de protection peut avec la garniture interne être fixe à demeure ou amovible pour libérer le pied du cheval.

La couche interne 2 peut s'obtenir par découpage, moulage sur empreinte même du pied ou tout autre procédé de recouvrement suivant la nature du matériau utilisé.

La couche externe adiprene® 7 peut se mouler avec empreinte dimensionnée sur la première couche.

Il est possible également d'utiliser le premier revêtement pour soigner telle affection du pied en prévoyant par exemple un alvéolage destiné à retenir un produit de traitement ou encore imprégner l'enveloppe avec un agent actif.

Suivant les applications on peut prévoir des perforations pour assurer le passage de l'air, soit à travers l'enveloppe interne 2, soit à travers le recouvrement rigide 7.

C'est pourquoi les formes, dimensions et dispositions des différents éléments pourront varier dans la limite des équivalents, comme d'ailleurs les matières utilisées pour leur fabrication, sans changer pour cela la conception générale de l'invention qui vient d'être décrite et telle qu'elle est revendiquée.

## Revendications

1. Dispositif chaussant pour équidés destiné à la protection des pieds des chevaux et similaires dans les domaines utilitaires et sportifs, realisé par la combinaison d'un matériau enveloppant souple et élastique, dit enveloppe interne, (2) indépendant du sabot du cheval qu'il protège sur toutes ses faces avec une enveloppe extérieure (7) rigide et résistante aux chocs et à l'usure et indépendante de l'enveloppe interne (2) mais se moulant exactement dessus.

2. Dispositif suivant la revendication 1 se caractérisant par le fait que le revêtement interne souple et élastique (2) épouse les formes des pince, mamelle, muraille, fourchette par moulage ou découpage de toutes matières telles que caoutchouc naturel ou synthétique et résine synthétique de toutes natures présentant des qualités identiques.

3. Dispositif suivant la revendication 1 se caractérisant par le fait que le recouvrement extérieur indépendant est en matière rigide, étant précisé que sa partie supérieure est légèrement élastique avec progressivité de la rigidité vers les parties inférieures afin que sa semelle (9) soit dure et résistante.

4. Dispositif suivant la revendication 1 se caractérisant par le fait que la semelle (9) de l'enveloppe externe peut recevoir sur sa face portant des éléments protecteurs complémentaires tels des crampons, antidérapants, fers et autres, alors que la partie interne (2) indépendante peut éventuellement servir de support à des agents actifs de traitement et comporter des perforations d'aération.

## Patentansprüche

1. Vorrichtung zum Beschuhen von Einhufern, die zum Schutz der Füsse von Pferden und ähnlichen Tieren auf den Nutzungs- und Sportgebieten bestimmt ist, realisiert durch die Zusammensetzung eines elastischen Umhüllungsmaterials, welches interne Umhüllung (2) genannt wird und unabhängig vom Huf des Pferdes, den sie vollflächig mit einer starren und stoss- und verschleisswiderständigen externen Hülle (7) schützt, ist, und die unabhängig von der internen Hülle (2), an welche sie sich genau formschlüssig anpasst, ist.

2. Vorrichtung gemäss dem Patentanspruch 1 dadurch gekennzeichnet, dass der elastische interne Belag (2) durch Verguss bzw. Zuschnitt aller Stoffe, wie Naturgummi bzw. Kunstgummi und Kunstharz aller Arten mit identischen Qualitäten die Formen der Spitzen, Zitzen, Wände und Gabeln annimmt.

3. Vorrichtung gemäss dem Patentanspruch 1 dadurch gekennzeichnet, dass die äussere unabhängige Bedeckung aus einem staarren Stoff besteht, wobei zu bemerken ist, dass der obere Teil leicht elastisch ist, und zwar mit einer Progressivität der Starrheit in Richtung der unteren Teilen, damit die Sohle (9) hart und widerstandsfähig wird.

4. Vorrichtung gemäss dem Patentanspruch 1 dadurch gekennzeichnet, dass die Sohle 9 der externen Hülle auf ihrer Tragfläche mit zusätzlichen Schutzelementen, wie Gleitschutzgreifer, Eisenstücke bzw. ähnliche Teile versehen werden kann, wobei der unabhängige interne Teil (2) ggf. als Träger für aktive Behandlungsmittel dienen kann und mit Belüftungsbohrungen versehen werden kann.

## Claims

1. Footwear device for equidae intended to protect the feet of horses and similar in the utilitarian and sporting fields, formed by the combination of a flexible and resilient enveloping material, called internal covering (2) independent of the hoof of the horse which it protects on all its faces with a rigid outer covering (7) resistant to shocks and wear and independent of the internal covering (2) but being molded exactly thereon.

2. Device according to claim 1, characterized by the fact that the flexible and resilient internal covering (2) takes on exactly the shapes of the toe, sidewall, wall, frog by molding or cutting out all materials such as natural or synthetic rubber and synthetic resin of all kinds having identical qualities.

3. Device according to claim 1, characterized by the fact that the outer independent covering is made from a rigid material, it being specified that the upper part is slightly resilient with progressivity of rigidity towards the lower parts so that the sole (9) is hard and resistant.

4. Device according to claim 1, characterized in that the sole (9) of the outer covering may receive on its bearing face complementary protective elements such as studs, non slip devices, horseshoes and others, whereas the independent internal part (2) may possibly serve as a support for active treatment agents and comprise ventilation perforations.

FIG 1

FIG 2

FIG 3

FIG 4

FIG 5

FIG 6